# EUROPÄISCHE PATENTSCHRIFT

(11) **EP 3 972 796 B1**
(45) Veröffentlichungstag und Bekanntmachung des Hinweises auf die Patenterteilung: **21.06.2023**
(21) Anmeldenummer: 20726347.6
(22) Anmeldetag: 13.05.2020
(51) Int. Cl.: B29C 33/30, B29C 45/36, B29C 33/44, B29C 45/26, B29C 45/40

(54) **SPRITZGUSSWERKZEUG MIT ZENTRIEREINRICHTUNG**
INJECTION-MOULDING TOOL WITH CENTERING DEVICE
OUTIL DE MOULAGE PAR INJECTION COMPRENANT UN DISPOSITIF DE CENTRAGE

(30) Priorität: 22.05.2019 CH 6622019; 04.03.2020 CH 2572020
(43) Veröffentlichungstag der Anmeldung: 30.03.2022
(73) Patentinhaber: Fostag Formenbau AG, 8260 Stein am Rhein (CH)
(72) Erfinder: MÜHLEMANN, Rolf, 8255 Schlattingen (CH)
(74) Vertreter: Keller Schneider Patent- und Markenanwälte AG
(86) Internationale Anmeldenummer: PCT/EP2020/063255
(87) Internationale Veröffentlichungsnummer: WO 2020/234065

(56) Entgegenhaltungen:
- EP-A2- 1 083 035
- WO-A1-2017/215801
- JP-A- 2001 334 557

## Beschreibung

### Technisches Gebiet

Die Erfindung betrifft ein Spritzgusswerkzeug mit einer Zentriereinrichtung, welches eine Matrizenhalteplatte mit mindestens einer kavitätsbildenden Matrizeneinheit, eine Kernhalteplatte mit mindestens einer Kerneinheit, die im geschlossenen Zustand des Spritzgusswerkzeugs in die Matrizeneinheit eingeführt ist, und zwischen der Kernhalteplatte und der Matrizenhalteplatte eine Abstreifplatte umfasst.

### Technischer Hintergrund

Bei der Herstellung von dünnwandigen, behälterartigen Spritzgusserzeugnissen, insbesondere Becher, Tuben, Tubenköpfe, Röhrchen, Flaschenrohlingen oder Spritzen, ist eine gleichmässige Wandstärke von grosser Bedeutung, da bereits kleine Abweichungen in der Wandstärke beim Abkühlen und Entformen des Behälters wegen auftretenden Volumenschwindung zu starken Verformungen des Behälters führen können.

Die Kavitäten für solche Spritzgusserzeugnisse werden regelmässig durch eine Matrize und einen darin angeordneten Kern ausgebildet. Um eine gleichmässige Wandstärke zu erhalten, muss also die Position des Kerns in einer Trennebene senkrecht zur Schliessrichtung des Werkzeugs, derart ausgerichtet sein, dass er mit der kavitätsbildenden Matrize zentriert ist. Bei mehr-kavitäten Werkzeugen ist dabei jeder Kern separat zentriert. Eine separate Zentrierung der Kerne in der jeweiligen Matrize ist wichtig, um mit allen Kavitäten Spritzgusserzeugnisse mit gleichmässigen Wandstärken zu erhalten.

Die WO2017215801 offenbart den Oberbegriff des Anspruchs 1. Aus der WO2017215801 bekannte Spritzgusswerkzeuge für solche dünnwandigen, behälterartigen Spritzgusserzeugnisse, umfassen eine Matrizenhalteplatte, in welcher mindesten eine kavitätsbildende Matrizeneinheit resp. Matrize fest gehalten ist, eine Kernhalteplatte auf welcher mindestens ein kavitätsbildende Kerneinheit resp. ein Kern gehalten ist, und einen Abstreifring, welcher formschlüssig in einer Aussparung der Kerneinheit angeordnet ist und entgegen die Schliessrichtung bewegbar ist, um das fertige Spritzgusserzeugnis nach dem Öffnen des Werkzeuges vom Kern abzustreifen. Der Kern resp. die Kerneinheit ist zur Einstellung der Zentrierung schwimmend auf der Kernhalteplatte gelagert und ist bei erfolgter, korrekter Zentrierung über Befestigungsmittel auf der Kernhalteplatte in seiner Position fixiert.

Die Kernzentrierungseinrichtung umfasst mehreren - meist vier - Zentrierleisten, die eine gegenüber der Schliessrichtung des Spritzgusswerkzeugs geneigt Zentrierfläche aufweisen und auf einer entsprechend geneigten Auflagefläche der Kerneinheit abgestützt sind. Durch Hinzufügen oder Entfernen von Justierfolien bei den Zentrierleisten kann der Kern exakt in der zugehörigen Matrize zentriert werden. Jede Zentrierleiste bildet also eine Zentrierfläche an der Kerneinheit aus, welche mit einer Zentrierfläche an der Matrizeneinheit korrespondiert. Sobald Kern und Matrize zueinander zentriert sind, wird die Kerneinheit an der Kernhalteplatte fixiert und das Werkzeug ist bereit für die Herstellung der Spritzgusserzeugnisse. Bei mehreren Kerneinheiten sind zur individuellen Zentrierung der einzelnen Einheiten Luftspalte zwischen benachbarten Kerneinheiten vorhanden.

Bei einer weiteren in WO2017215801 beschriebene Zentriereinrichtung ist der Abstreifring schwimmend in einer Abstreifplatte gehalten, welche zwischen Matrizenhalteplatte und Kernhalteplatte angeordnet ist. Die mindestens eine justierbare Kernzentrierungseinrichtung ist zwischen Kerneinheit und Kernhalteplatte angeordnet. DE3140711 und JPS5120258 beschreiben jeweils eine Zentriereinrichtung, welche auf einer kreisförmigen Exzenterplatte basiert, um die Position des Kerns relativ zur Matrize einzustellen. Nachteilig an einer solchen Zentriereinrichtung ist, dass die kreisförmigen Exzenterplatte, welche die Kerneinheit exzentrisch hält, nur schwer auf die gewünschte Verschiebung des Kerns einstellbar ist und mittels Feststellschraube gegen Rotation fixiert werden muss. Aufgrund der Feststellschrauben ist sie zudem nicht platzsparend und eine meist seitliche Bedienung muss gewährleistet sein. Zudem kann sich die Kreisscheibe trotz Fixierung während dem Betrieb des Formwerkzeugs mit der Zeit verschieben.

Die EP 1 083 035 A2 beschreibt eine Formvorrichtung zum Formen eines Rotors. Diese Formvorrichtung verfügt über gegenüberliegende Formwerkzeuge, wobei an einem der Formwerkzeuge ein Einsatzwerkzeug befestigt ist. Das Einsatzwerkzeug verfügt über ein Exzenterteil, in einer zylindrischen Haltebohrung, welches durch eine Positionierungsanordnung bezüglich der Winkelposition eingestellt werden kann.

### Darstellung der Erfindung

Eine Aufgabe der Erfindung ist es, ein Spritzgusswerkzeug mit einer Zentriereinrichtung anzugeben, welche wenigstens einige der obigen Nachteile vermeidet. Eine weitere Aufgabe liegt darin, die Zentriereinrichtung platzsparender und einfacher zu gestallten. Diese Aufgabe wird durch ein Spritzgusswerkzeug mit den Merkmalen des unabhängigen Anspruchs 1 gelöst.

Das Spritzgusswerkzeug umfasst eine Matrizenhalteplatte mit mindestens eine kavitätsbildende Matrizeneinheit und eine Kernhalteplatte mit mindestens einer Kerneinheit, die im geschlossenen Zustand des Formwerkzeugs in die Matrizeneinheit eingeführt ist, und zwischen der Kernhalteplatte und der Matrizenhalteplatte eine Abstreifplatte. Die Zentriereinrichtung umfasst einen Zentriereinsatz und eine Zentriereinsatzhalterung mit einer um eine Mittelachse MA drehsymmetrischen Aussparung zur auswechselbaren Aufnahme des Zentriereinsatzes. Der Zentriereinsatz weist eine Öffnung zur Aufnahme der Kerneinheit auf. Der Zentriereinsatz und die Aussparung der Zentriereinsatzhalterung sind derart ausgestaltet, dass der Zentriereinsatz in mindestens drei um eine Mittelachse MB des Zentriereinsatzes drehbare Positionen in der Aussparung der Zentriereinsatzhalterung verdrehsicher einsetzbar ist und dabei die Mittelachse MA der Aussparung und die Mittelachse MB des Zentriereinsatzes sich überlagern. Weiter ist eine Mittelachse MC der Öffnung des Zentriereinsatzes um einen Versatz exzentrisch zur Mittelachse MB des Zentriereinsatzes angeordnet. Die mindestens eine Zentriereinrichtung ist in der Abstreifplatte angeordnet.

Formwerkzeuge, insbesondere Spritzgusswerkzeuge weisen in der Regel mehrere Kavitäten auf. Um mit jedem Produktionszyklus möglichst viele Erzeugnisse zu Formen, müssen diese Kavitäten möglichst dicht im Formwerkzeug angeordnet sein. Die beschriebene Zentriereinrichtung erlaubt eine solche dichte Packung, weil sie einfach und platzsparend im Aufbau ist. Es können damit auf einfache Weise Herstellungstoleranzen ausgeglichen werden. Bei Spritzgusswerkezeugen mit seitlicher Einspritzung können die jeweiligen Kerneinheiten in Bezug auf den Einspritzpunkt ausgerichtet werden, so dass sie während dem Spritzvorgang zentrisch in der Matrize angeordnet sind.

Die Zentrierung der Kerneinheit erfolgt dabei durch die Grösse des Versatzen des Zentriereinsatzes und die Ausrichtung des Versatzes bei eingesetztem Zentriereinsatz. Die Kerneinheit ist in der Öffnung des Zentriereinsatzes aufgenommen, welcher wiederum ortsfest und drehsicher in der Aussparung der Zentriereinsatzhalterung aufgenommen ist. Die Richtung des Versatzes wird eingestellt, indem der Zentriereinsatz in eine der mindestens drei Dreh-Positionen in die Aufnahme eingesetzt wird. Zusätzliche Mittel zur Verdrehsicherung, z.B. Klemmschrauben, sind nicht vorhanden, resp. nicht notwendig.

Eine Kerneinheit, welche nicht korrekt in der Matrize ausgerichtet ist, kann nun um einen gewünschten Versatz verschoben werden, indem der entsprechende Zentriereinsatz gewählt wird, dessen Mittelachse MC der Öffnung um eben diesen Versatz exzentrisch zur Mittelachse MB des Zentriereinsatzes versetzt ist. Die Längsrichtung der Kerneinheit steht dabei senkrecht zur Versatzrichtung. Die Richtung, in welche die Korrektur vorgenommen wird, wird durch das Einsetzen des Zentriereinsatzes in einer der mindestens drei Positionen bestimmt. Ein Zentriereinsatz dessen Versatz eine bestimmte Grösse aufweist, kann also zur Korrektur dieses Versatzen in die mindestens drei Richtungen eingesetzt werden. Mit einem Sortiment an Zentriereinsätzen, welche sich lediglich in der Grösse des Versatzes unterscheiden, können somit auf einfache Weise alle Kerneinheiten wie gewünscht zentriert werden. Falls nach einem Testlauf des Formwerkzeuges die Zentrierung der Kerneinheit nicht stimmt, kann der Zentriereinsatz einfach ausgewechselt werden, um die korrekte Zentrierung zu erhalten.

Je nach Bedarf kann der Versatz 0.01 mm bis 0.1 mm beträgt. Zur Feinjustierung der Kerneinheiten eines Mehrkavitätenwerkzeugs kann ein Set mit einer Vielzahl von Zentriereinsätzen gefertigt werden, mit beispielsweise einer Versatzabstufung von 0,01 mm. Je nach vorzunehmender Korrektur wird ein Zentriereinsatz mit gewünschtem Versatz gewählt, in die richtige Position gedreht und in die Zentriereinsatzhalterung eingesetzt. In vielen Fällen reichen Zentriereinsätze mit einem Versatz von 0,01 bis 0,05 mm in einer Abstufung von 0,01 mm.

Weitere Ausführungsformen der Erfindung sind in den abhängigen Ansprüchen angegeben.

In einigen Ausführungsformen ist der Zentriereinsatz durch ein in der Abstreifplatte aufgenommenes Abstreifelement (resp. einen Abstreifring) ausgebildet. Das Abstreifelement, welches bei Öffnen des Spritzgusswerkzeugs zum Abstreifen des Spritzgusserzeugnisses von der Kerneinheit dient, weist entsprechend die Öffnung zur Aufnahme der Kerneinheit auf. Die Kerneinheit kann dabei schwimmend in der Kernhalteplatte gehalten sein und wird im geschlossenen Spritzgusswerkzeug durch das Abstreifelement zentriert. Die Zentriereinsatzhalterung ist direkt in der Abtreifplatte oder als separates in der Abstreifplatte aufgenommenes Teil ausgebildet. Dies Ausführungsform ist besonders platzsparen, weil das Abstreifelement zusätzlich die Funktion der exakten Zentrierung der Kerneinheit übernimmt und somit kein zusätzliches Teil für die Zentrierung notwendig ist.

In einigen Ausführungsformen weist die Aussenkontur des Zentriereinsatzes die Form eines regelmässigen Polygons (d.h. ein Polygon, das sowohl gleichseitig als auch gleichwinklig ist) auf. Die Innenkontur der Aussparung der Zentriereinsatzhalterung ist komplementär zur Aussenkontur des Zentriereinsatzes ausgebildet, so dass der Zentriereinsatz verdrehsicher in der Aussparung der Zentriereinsatzhalterung aufnehmbar ist. Dabei ist die Mittelachse MC der Öffnung des Zentriereinsatzes um einen Versatz exzentrisch in Richtung einer Polygonseite oder einer Polygonecke hin ausgerichtet. Der Zentriereinsatz, welcher eine symmetrische Aussenkontur aufweist, kann abhängig von der Anzahl Seitenflächen (Polygonseiten) resp. Ecken (Polygonecken) des regelmässigen Polygons in ebenso viele Stellungen gedreht werden. D.h. ein Polygon mit n Seitenflächen kann in n verschiedene Positionen gedreht werden. Aufgrund der Aussen- und Innenkontur in Form eines regelmässigen Polygons ist der eingesetzte Zentriereinsatz während dem Gebrauch des Formwerkzeuges gegen Rotation gesichert. Eine zusätzliche Rotationssicherung ist nicht notwendig.

In einigen Ausführungsformen kann das regelmässige Polygon drei bis zwölf Seitenflächen resp. Ecken aufweisen. Gute Ergebnisse wurden mit einem regelmässigen 8-Eck erzielt. Mit einem 8-Eck sind acht unterschiedliche Versatzrichtungen einstellbar, was jeweils einer Abstufung der Versatzrichtung von jeweils 45 Grad für einen Zentriereinsatz entspricht (bei einem Versatz zur Polygonseite / Polygonecke hin). Werden zwei Zentriereinsätze verwendet, einmal mit Versatz zur Polygonseite und einmal mit Versatz zur Polygonecke, dann ist sogar eine Abstufung der Versatzrichtung von 22,5 Grad möglich.

In einigen Ausführungsformen umfasst der Zentriereinsatz einen kreiszylindrischen Grundkörper, auf dessen Mantelfläche ein senkrecht zur Mittelachse MB des Zentriereinsatzes stehender Vorsprung, z.B. in Form eines Pins, eines Stiftes oder eines Bolzen, angeordnet ist. Die Aussparung der Zentriereinsatzhalterung weist eine zum Grundkörper des Zentriereinsatzes komplementäre Form auf, welche mindestens drei drehsymmetrisch angeordnete, parallel zur Mittelachse MA der Aussparung verlaufende Schlitze zur Aufnahme des Vorsprunges des Zentriereinsatzes aufweist. Die Mittelachse MC der Öffnung des Zentriereinsatzes ist in der Regel um einen Versatz exzentrisch in Richtung Vorsprung hin ausgerichtet.

In einigen Ausführungsformen kann die Kerneinheit derart in der Öffnung aufnehmbar sein, dass eine Verschiebung in Längsrichtung der Kerneinheit möglich ist. Dies ist insbesondere dann der Fall, wenn die Zentriereinrichtung in der Matrizeneinheit vorgesehen ist und die Kerneinheit erst beim Schliessen des Formwerkzeugs in die Öffnung eintaucht. Auch bei Formwerkzeugen, insbesondere Spritzgusswerkzeugen, die eine Abstreifplatte aufweisen, ist bei einem in der Abstreifplatte vorgesehen Zentriereinsatz die Kerneinheit in Kernlängsrichtung verschiebbar in der Öffnung des Zentriereinsatzes aufnehmbar. Quer zur Kernlängsrichtung ist die Aufnahme in der Öffnung ortsfest, so dass eine exakte Zentrierung möglich ist. Die Öffnung zur Aufnahme der Kerneinheit kann zylindrisch oder konisch ausgebildet sein und kann sich im Wesentlichen über die gesamte Dicke der Abstreifplatte erstrecken. Die Kerneinheit ist dann in diesem Bereich entsprechend ebenfalls zylindrisch oder konisch ausgebildet. Um allfällige Reibung und somit Verschleiss der einzelnen Teil zu reduzieren, kann die Kerneinheit in einem mittleren Bereich des Abschnittes, welcher im geschlossen Werkzeug in der Öffnung gehalten ist, eine umlaufende Verjüngung aufweisen. In diesem mittleren Bereich besteht im geschlossen Zustand kein Kontakt zum Zentriereinsatz. Die beidseitig an den mittleren Bereich anschliessenden Bereiche kontaktieren jedoch den Zentriereinsatz und fixieren im geschlossen Zustand des Werkzeuges die Kerneinheit an der gewünschten Stelle.

In einigen Ausführungsformen kann die Öffnung ein Durchbruch (z.B. bevorzugt bei Verwendung in der Kernhalteplatte oder Abstreifplatte) oder ein Sackloch (z.B. bevorzugt bei Verwendung in der Matrizeneinheit) sein. Bei Verwendung der Zentriereinrichtung in der Matrizeneinheit, wird die Kerneinheit beim Schliessen des Formwerkzeugs in die Öffnung eingeführt. Um diese Einführung zu erleichtern und ein unerwünschtes Anstehen an den Seitenrändern zu verhindern, kann die Öffnung konisch ausgebildet sein. Entsprechend kann auch die Spitze der Kerneinheit, welche in die Öffnung eintaucht, konisch ausgebildet sein.

In einigen Ausführungsformen kann der Zentriereinsatz eine zylindrische Form aufweisen, z.B. ähnlich wie eine Sechskantmutter, aber ohne Innengewinde und mit exzentrischer Bohrung.

In einigen Ausführungsformen kann das Formwerkzeug mehrere Kavitäten aufweisen, die jeweils mit mindestens einer Zentriereinrichtung versehen sind.

In einigen Ausführungsformen kann eine weitere Zentriereinrichtung in der Kernhalteplatte und/oder der Matrizeneinheit angeordnet sein.

In einigen Ausführungsformen kann die Zentriereinsatzhalterung als separates in der Matrizeneinheit, der Abstreifplatte und/oder der Kernhalteplatte aufgenommenes Teil ausgebildet sein.

In einigen Ausführungsformen kann die Zentriereinsatzhalterung durch die Matrizeneinheit, die Abstreifplatte und/oder die Kernhalteplatte ausgebildet sein.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung eines Ausschnitts eines Spritzgusswerkzeugs mit einer Zentriereinrichtung;
- Fig. 2: eine Zentriereinrichtung in Form eines regelmässigen 8-Ecks;
- Fig. 3: mehrere in einem Kreis angeordnete Zentriereinrichtungen;
- Fig. 4: eine weitere Variante einer Zentriereinrichtung, unter (a) eine Draufsicht auf die Stirnfläche des Zentriereinsatzes mit Pin, unter (b) eine Schnittdarstellung der Zentrierhalterung, unter (c) eine perspektivische Ansicht des Zentriereinsatzes; und
- Fig. 5: eine Schnittdarstellung eines Ausschnitts eines Spritzgusswerkzeugs mit einem als Zentriereinrichtung ausgebildeten Abstreifelement.

### Wege zur Ausführung der Erfindung

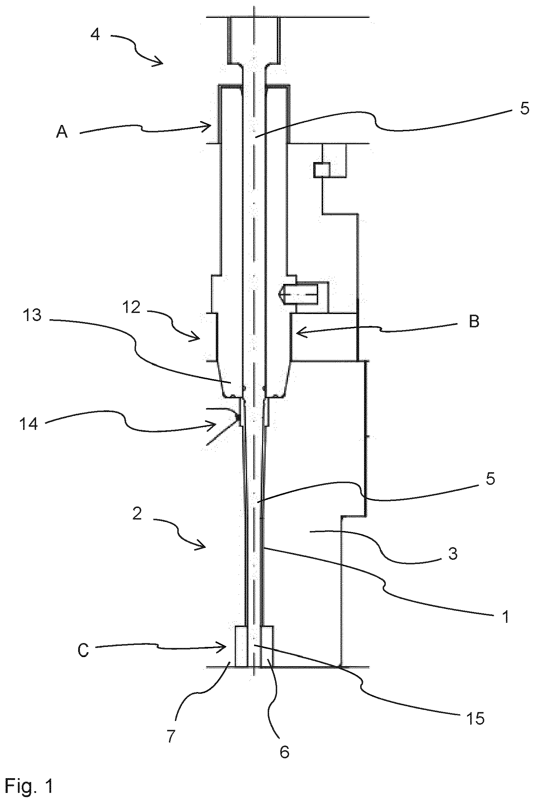

Fig. 1 zeigt eine Schnittdarstellung eines Ausschnitts eines Spritzgusswerkzeugs mit mindestens einer Kavität 1 für eine dünnwandiges, längliches Spritzgusserzeugnis. Das Spritzgusswerkzeug umfasst eine Kernhalteplatte 4, in welcher mindestens eine kavitätsbildende Kerneinheit 5 gehalten ist, und eine Matrizenhalteplatte 2, in welcher mindestens eine kavitätsbildente Matrizeneinheit oder Matrize 3 gehalten ist. Weiter umfasst das Spritzgusswerkzeug zwischen der Kernhalteplatte 4 und der Matrizenhalteplatte 2 eine Abstreifplatte 12, in welcher ein Abstreifelement resp. Abstreifring 13 gehalten ist. Im gezeigten Spritzgusswerkzeug erfolgt die Einspritzung über einen in Bezug auf die Kerneinheit 5 seitlich angeordneten Einspritzkanal 14.

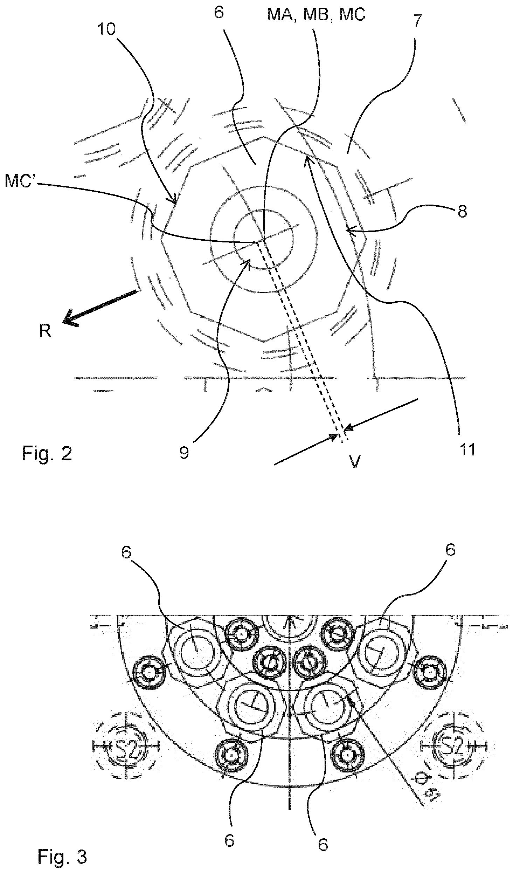

Fig. 2 zeigt eine Zentriereinrichtung zur Zentrierung einer Kerneinheit in einem Formwerkzeug. Die Zentriereinrichtung umfasst einen Zentriereinsatz 6 und eine Zentriereinsatzhalterung 7. Die Zentriereinsatzhalterung 7 bildet eine Aussparung 8 zur passgenauen Aufnahme des Zentriereinsatzes 6 aus. Die Aussparung 8 ist drehsymmetrisch zu einer Mittelachse MA ausgebildet. In der gezeigten Ausführungsform ist weist die Aussparung 8 eine Innenkontur 11 in der Form eines regelmässigen 8-Ecks auf. Der Zentriereinsatz 6 ist drehsymmetrisch zu einer Mittelachse MB und weist im Querschnitt (Schnittebene senkrecht zur Längsachse der Kerneinheit resp. zur Mittelachse MB) eine zur Innenkontur 11 der Aussparung 8 komplementäre Aussenkontur 10 in der Form eines regelmässigen 8-Ecks auf. Weiter ist im Zentriereinsatz 6 eine Öffnung 9 für die Kerneinheit (nicht dargestellt) ausgebildet, in welcher die Kerneinheit in Längsrichtung verschiebbar oder nicht verschiebbar passgenau gehalten ist. In der gezeigten Darstellung ist die Mittelachse MC der Öffnung 9 exakt zentrisch zur Aussenkontur ohne Versatz ausgebildet, d.h. die Mittelachse MC der Öffnung 9 überlagert die Mittelachse MB des Zentriereinsatzes 6. Im eingesetzten Zustand des Zentriereinsatzes 6 in der Zentriereinsatzhalterung 7 überlagert die Mittelachse MB des Zentriereinsatzes 6 die Mittelachse MA der Aussparung 8 der Zentriereinsatzhalterung 7.

Eine Kerneinheit, welche aufgrund von Herstellungstoleranzen nicht exakt in der Kavität resp. der Matrizeneinheit zentriert ist, kann mit einem korrigierenden Zentriereinsatz 6 zentriert werden. Dazu ist die Mittelachse MC' der Öffnung 9 des Zentriereinsatzes 6 um einen Versatz V, üblicherweise im Bereich von wenigen hundertstel Millimeter, in Richtung R zu einer Seitenfläche (oder eine Ecke) des 8-Ecks versetzt ausgebildet. Mit einem Zentriereinsatz 6 mit exzentrischer Öffnung 9 kann nun die Position der Kerneinheit in Bezug auf die Matrize / Kavität in acht verschiedene Richtungen um den Versatz V korrigiert werden. Sollte die Grösse des Versatzes oder die Richtung des Versatzes im eingesetzten Zustand nicht stimmen (was mittels eines Testlaufs des Formwerkzeuges feststellbar ist) kann der Zentriereinsatz 6 einfach gedreht resp. durch einen Zentriereinsatz 6 mit grösserem oder kleinerem Versatz V ausgetauscht werden.

Fig. 3 zeigt nun mehrere Zentriereinrichtungen eines Spritzgusswerkzeugs, welche in der gezeigten Darstellung auf einem Kreis angeordnet sind (nur Halbkreis ist gezeigt). Die sehr platzsparende und einfache Ausgestaltung der Zentriereinrichtung mit einem Zentriereinsatz in Form eines regelmässigen Polygons erlaubt eine sehr dichte Packung von Kavitäten für dünnwandige, längliche Spritzgusserzeugnisse. Im der gezeigten Darstellung sind acht Kavitäten kreisförmig angeordnet (nur Halbkreis gezeigt), welche zentral angespritzt werden. Bei solchen Formwerkzeugen muss der Kern in der Kavität aufgrund des Anspritzdruckes oft leicht exzentrisch zum Einspritzpunkt hin angeordnet sein, damit er beim Einspritzvorgang in seiner korrekten, zentrischen Lage zu liegen kommt. Mit der beschriebenen Zentriereinrichtung ist eine solche dichte Packung möglich und die Position jeder Kerneinheit kann auf einfache Weise und individuell eingestellt werden.

Die Zentriereinrichtung ist je nach Bedarf in einem oder mehreren Bereichen (A, B, C) der Kerneinheit ausgebildet, wie in Fig. 1 dargestellt, wobei erfindungsgemäß eine Zentriereinrichtung in der Abstreifplatte (12) angeordnet ist. Zusätzlich zur Zentriereinrichtung in der Abstreifplatte 12 kann eine Zentriereinrichtung in der Kernhalteplatte 4 am Fuss der Kerneinheit 5 und/oder in der Matrizenhalteplatte 2 im Bereich der Kernspitze 15 angeordnet sein.

Im Bereich der Kernspitze 15 (Bereich C) ist die Öffnung 9 des Zentriereinsatzes 6 üblicherweise als leicht konisches Sackloch ausgebildet, in welches die Kernspitze 15 beim Schliessen des Formwerkzeugs eintaucht und gehalten ist. Eine seitliche Verschiebung quer zur Längsrichtung der Kerneinheit ist bei geschlossenem Werkzeug nicht möglich und die Lage der Kernspitze kann mit dem richtigen Zentriereinsatz 6 wie gewünscht eingestellt werden. Der Zentriereinsatz 6 ist verdrehsicher in der Zentriereinsatzhalterung 7 gehalten.

Ein Zentriereinsatz einer Zentriereinrichtung im Bereich der Abstreifplatte (Bereich B, Zentriereinrichtung nicht dargestellt) weist eine durchgehende Öffnung auf, in welcher die Kerneinheit in seiner Längsrichtung während dem Betrieb des Formwerkzeugs verschiebbar gehalten ist.

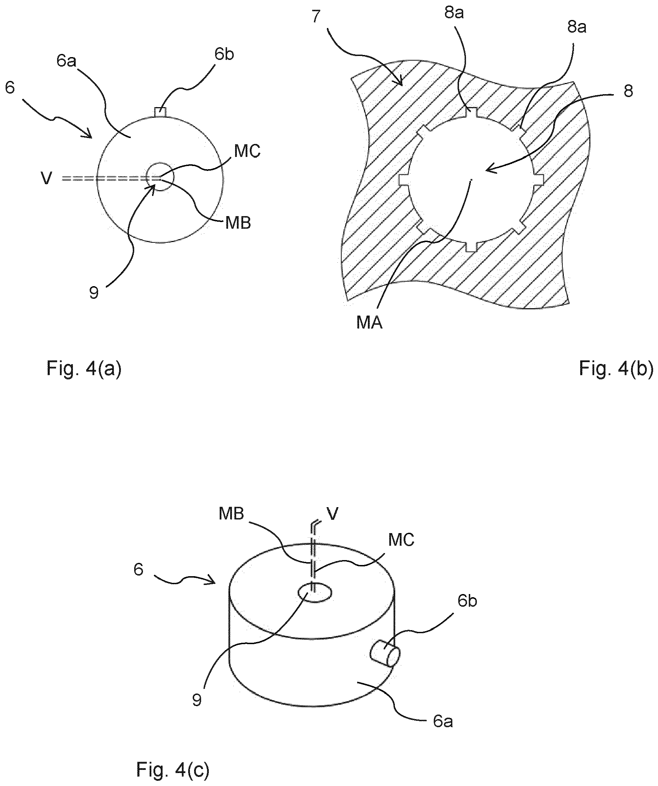

Ein Zentriereinsatz einer Zentriereinrichtung im Bereich der Kernhalteplatte (Bereich A, Zentriereinrichtung nicht dargestellt) resp. des Fusses der Kerneinheit weist eine durchgehende Öffnung auf, in welcher die Kerneinheit in seiner Längsrichtung verschiebbar gehalten ist. Die Kerneinheit wird nach erfolgter Einstellung in der Kernhalteplatte fixiert. Fig. 4(a) bis 4(c) zeigt eine weitere Variante einer Zentriereinrichtung, deren Zentriereinsatz 6 einen Grundkörper 6a in Form eines Kreiszylinders mit Mittelachse MB und einen seitlich auf der Zylindermantelfläche des Grundkörpers 6a angeordneten Vorsprung 6b umfasst. In der dargestellten Ausführungsform ist der Vorsprung 6a als senkrecht zur Mittelachse MB stehender Pin 6a ausgebildet. Weiter weist der Zentriereinsatz 6 die Öffnung 9 zur Aufnahme der Kerneinheit (nicht dargestellt) auf. Die Mittelachse MC der Öffnung 9 ist gegenüber der Mittelachse MB des Zentriereinsatzes um den Versatz V in Richtung Pin 6a versetzt.

Die zum Zentriereinsatz 6 komplementäre im wesentlichen kreiszylindrische Aussparung 8 der Zentriereinsatzhalterung 7 weist mehrere in Längsrichtung verlaufende Schlitze 8a zur Aufnahme des Vorsprunges resp. Pins 6b des Zentriereinsatzes 6 auf. Diese Schlitze 8a sind drehsymmetrisch um die Mittelachse MA der Aussparung 8 angeordnet. In der gezeigten Ausführungsform sind acht solche Schlitze 8a gezeigt. Im eingesetzten Zustand des Zentriereinsatzes 6 ist dieser mit dem Pin 6b in die gewünschte Richtung ausgerichtet und verdrehsicher in der Zentriereinsatzhalterung 7 gehalten. Eine zusätzliche Verdrehsicherung ist nicht erforderlich.

Mit der Zentriereinrichtung aus Fig. 4 kann eine Kerneinheit analog zur voran beschriebenen 8-eckigen Zentriereinrichtung zentriert werden.

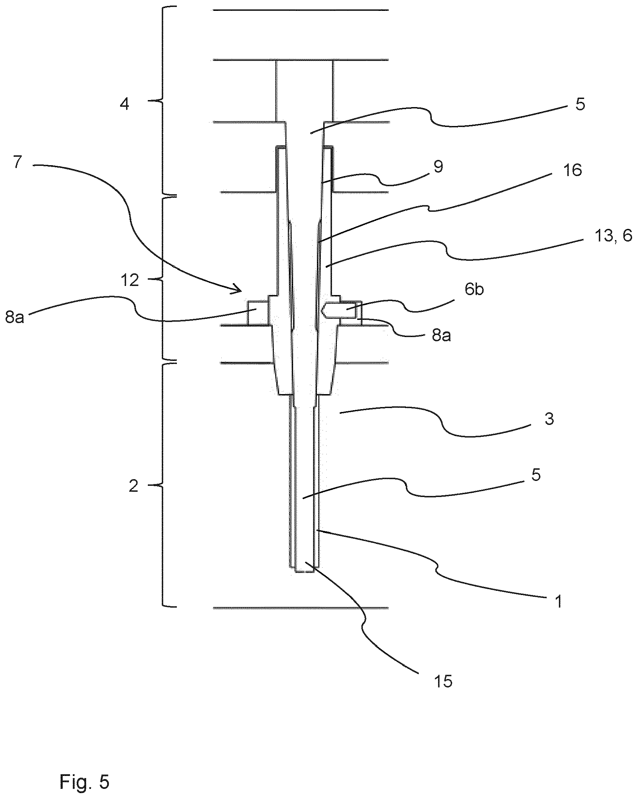

Fig. 5 zeigt ähnlich zu Fig. 1 eine Schnittdarstellung eines Ausschnitts eines Spritzgusswerkzeugs mit einer Zentriereinrichtung, die erfindungsgemäß in der Abstreifplatte 12 angeordnet ist. Das Spritzgusswerkzeug umfasst eine Matrizenhalteplatte 2 mit mindestens einer kavitätsbildenden Matrizeneinheit 3, eine Kernhalteplatte 4 mit mindestens einer Kerneinheit 5, die im geschlossenen Zustand des Formwerkzeugs in die Matrizeneinheit 3 eingeführt ist und eine Kavität 1 ausbildet, und eine Abstreifplatte 12, welche zwischen der Kernhalteplatte 4 und der Matrizenhalteplatte 2 angeordnet ist. In der Abstreifplatte 12 ist ein Abstreifelement resp. ein Abstreifring 13 angeordnet. Das Abstreifelement 13 dient dem Auswerfen eines Spritzgusserzeugnisses beim Öffnen des Werkzeugs nach dem Spritzgussvorgang, indem die Abstreifplatte 12 mit dem Abstreifelement resp. dem Abstreifring 13 relativ zur Kerneinheit 5 nach vorne zur Kernspitze 15 hin bewegt wird.

Das Abstreifelement 13 ist gleichzeitig der Zentriereinsatz 6 der Zentriereinrichtung. Die Abstreifplatte 12 bildet die Zentriereinsatzhalterung 7 aus. In der gezeigten Ausführungsform ist die Zentriereinrichtung gemäss der Variante auf Fig. 4 ausgebildet. Der Zentriereinsatz 6 weist einen Grundkörper 6a mit einem Pin 6b auf, welcher mittels Schlitzen 8a in der Zentriereinsatzhalterung 7 in die gewünschte Drehposition gebracht werden kann. Die Öffnung 9 des Zentriereinsatzes 6 ist konisch ausgebildet, so dass das Abstreifelement 13 resp. der Zentriereinsatz 6 relativ zur Kerneinheit 5 leicht nach vorne verschiebbar ist. Die Kerneinheit ist entsprechend ebenfalls konisch ausgebildet.

Das als Zentriereinsatz 6 ausgebildete Abstreifelement 13 erstreckt sich im Wesentlichen über die gesamte Dicke der Abstreifplatte 12. Auf diese Weise kann die in der Öffnung 9 des Zentriereinsatzes 6 geführte Kerneinheit über einen langen Bereich oder an zwei Bereichen gestützt und stabilisiert werden. Die Kerneinheit 5 ist dann entsprechend ebenfalls konisch ausgebildet. Um allfällige Reibung und somit Verschleiss der einzelnen Teile zu reduzieren, weist die Kerneinheit 5 in der gezeigten Ausführung in einem mittleren Bereich eines Abschnittes, welcher im geschlossen Werkzeug in der Öffnung 9 gehalten ist, eine umlaufende Verjüngung 16 auf. In diesem mittleren Bereich besteht im geschlossen Zustand kein Kontakt zum Zentriereinsatz 6. Die beidseitig and den mittleren Bereich anschliessenden Bereiche kontaktieren jedoch den Zentriereinsatz 6 und fixieren im geschlossen Zustand des Werkzeuges die Kerneinheit an der gewünschten Stelle.

Die Kerneinheit 5 ist in der gezeigten Ausführungsform schwimmend in der Kernhalteplatte 4 aufgenommen. Bei Schliessen des Werkzeugs wird die Kerneinheit 5 mittels des Zentriereinsatzes 6 resp. Abstreifelements 13 in die korrekte Position zentriert und fixiert.

### Bezeichnungsliste

- 1: Kavität
- 2: Matrizenhalteplatte
- 3: Matrizeneinheit/Matrize
- 4: Kernhalteplatte
- 5: Kerneinheit/Kern
- 6: Zentriereinsatz
- 6a: Grundkörper
- 6b: Vorsprung, Pin
- 7: Zentriereinsatzhalterung
- 8: Aussparung
- 8a: Schlitz
- 9: Öffnung
- 10: Aussenkontur
- 11: Innenkontur
- 12: Abstreifplatte
- 13: Abstreifring
- 14: Einspritzkanal
- 15: Kernspitze
- 16: umlaufende Verjüngung
- A, B, C: Bereich der Anordnung einer Zentriereinrichtung
- MA: Mittelachse der Aussparung 8
- MB: Mittelachse des Zentriereinsatzes 6
- MC, MC': Mittelachse der Öffnung 9
- R: Versatzrichtung
- V: Versatz

## Patentansprüche

1. Spritzgusswerkzeug mit mindestens einer Zentriereinrichtung, wobei das Spritzgusswerkzeug eine Matrizenhalteplatte (2) mit mindestens einer kavitätsbildenden Matrizeneinheit (3), eine Kernhalteplatte (4) mit mindestens einer Kerneinheit (5), die im geschlossenen Zustand des Formwerkzeugs in die Matrizeneinheit (3) eingeführt ist, und zwischen der Kernhalteplatte (4) und der Matrizenhalteplatte (2) eine Abstreifplatte (12) umfasst, **dadurch gekennzeichnet, dass** die Zentriereinrichtung einen Zentriereinsatz (6) und eine Zentriereinsatzhalterung (7) mit einer um eine Mittelachse MA drehsymmetrischen Aussparung (8) zur Aufnahme des Zentriereinsatzes (6) umfasst; wobei der Zentriereinsatz (6) eine Öffnung (9) zur Aufnahme der Kerneinheit (5) aufweist; wobei der Zentriereinsatz (6) und die Aussparung (8) der Zentriereinsatzhalterung (7) derart ausgestaltet sind, dass der Zentriereinsatz (6) in mindestens drei um eine Mittelachse MB des Zentriereinsatzes (6) drehbare Positionen in der Aussparung (8) der Zentriereinsatzhalterung (7) verdrehsicher einsetzbar ist und dabei die Mittelachse MA der Aussparung und die Mittelachse MB des Zentriereinsatzes sich überlagern; und wobei eine Mittelachse MC der Öffnung (9) des Zentriereinsatzes (6) um einen Versatz (V) exzentrisch zur Mittelachse MB des Zentriereinsatzes (6) angeordnet ist; und dass die mindestens eine Zentriereinrichtung in der Abstreifplatte (12) angeordnet ist.

2. Spritzgusswerkzeug nach Anspruch 1, **dadurch gekennzeichnet, dass** der Zentriereinsatz (6) durch ein in der Abstreifplatte (12) aufgenommenes Abstreifelement (13) ausgebildet ist.

3. Spritzgusswerkzeug nach einem der vorangehenden Ansprüche, **dadurch gekennzeichnet, dass** die Kerneinheit (5) schwimmend in der Kernhalteplatte (4) gehalten ist.

4. Spritzgusswerkzeug nach einem der vorangehenden Ansprüche, **dadurch gekennzeichnet, dass** die Aussenkontur (10) des Zentriereinsatzes (6) die Form eines regelmässigen Polygons aufweist, wobei die Innenkontur (11) der Aussparung (8) der Zentriereinsatzhalterung (7) komplementär zur Aussenkontur (10) des Zentriereinsatzes (6) ausgebildet ist, und wobei die Mittelachse MC der Öffnung (9) des Zentriereinsatzes (6) um einen Versatz (V) exzentrisch in Richtung einer Polygonseite oder einer Polygonecke hin (Richtung R) ausgerichtet ist.

5. Spritzgusswerkzeug nach Anspruch 4, **dadurch gekennzeichnet, dass** das regelmässige Polygon drei bis zwölf Seitenflächen aufweist.

6. Spritzgusswerkzeug nach einem der Ansprüche 1 bis 3, **dadurch gekennzeichnet, dass** der Zentriereinsatz (6) einen kreiszylindrischen Grundkörper (6a) umfasst, auf dessen Mantelfläche ein senkrecht zur Mittelachse MB des Zentriereinsatzes (6) stehender Vorsprung (6b) angeordnet ist; und dass die Aussparung (8) der Zentriereinsatzhalterung (7) eine zum Grundkörper (6a) komplementäre Form aufweist, welche mindestens drei drehsymmetrisch angeordnete, parallel zur Mittelachse MA der Aussparung (8) verlaufende Schlitze (8a) zur Aufnahme des Vorsprunges (6b) des Zentriereinsatzes (6) aufweist.

7. Spritzgusswerkzeug nach Anspruch 6, **dadurch gekennzeichnet, dass** die Mittelachse MC der Öffnung (9) des Zentriereinsatzes (6) um einen Versatz (V) exzentrisch in Richtung Vorsprung (6b) hin ausgerichtet ist.

8. Spritzgusswerkzeug nach einem der vorangehenden Ansprüche, **dadurch gekennzeichnet, dass** die Kerneinheit (5) derart in der Öffnung (9) aufnehmbar ist, dass eine Verschiebung in Längsrichtung der Kerneinheit (5) möglich ist.

9. Spritzgusswerkzeug nach einem der vorangehenden Ansprüche, **dadurch gekennzeichnet, dass** die Öffnung (9) ein Durchbruch oder ein Sackloch ist oder dass die Öffnung (9) zylindrisch oder konisch ausgebildet ist.

10. Spritzgusswerkzeug nach einem der vorangehenden Ansprüche, **dadurch gekennzeichnet, dass** der Zentriereinsatz (6) eine zylindrische Form aufweist.

11. Spritzgusswerkzeug nach einem der vorangehenden Ansprüche, **dadurch gekennzeichnet, dass** der Versatz (V) 0.01 mm bis 0.1 mm beträgt.

12. Spritzgusswerkzeug nach einem der vorangehenden Ansprüche, **dadurch gekennzeichnet, dass** das Spritzgusswerkzeug mehrere Kavitäten (1) aufweist, die jeweils mindestens eine Zentriereinrichtung aufweisen.

13. Spritzgusswerkzeug nach einem der vorangehenden Ansprüche, **dadurch gekennzeichnet, dass** eine weitere Zentriereinrichtung in der Kernhalteplatte (4) und/oder der Matrizeneinheit (3) angeordnet ist.

14. Spritzgusswerkzeug nach einem der vorangehenden Ansprüche, **dadurch gekennzeichnet, dass** die Zentriereinsatzhalterung als separates in der Matrizeneinheit (3), der Abstreifplatte (12) und/oder der Kernhalteplatte (4) aufgenommenes Teil ausgebildet ist.

15. Spritzgusswerkzeug nach einem der vorangehenden Ansprüche, **dadurch gekennzeichnet, dass** die Zentriereinsatzhalterung durch die Matrizeneinheit (3), die Abstreifplatte (12) und/oder die Kernhalteplatte (4) ausgebildet ist.

## Claims

1. An injection mould with at least one centring device, the injection mould comprising a die holding plate (2) having at least one cavity-forming die unit (3), a core holding plate (4) having at least one core unit (5), which is introduced into the die unit (3) in the closed state of the mould, and a stripping plate (12) between the core holding plate (4) and the die holding plate (2), **characterized in that** the centring device comprises a centring insert (6) and a centring insert holder (7) having a recess (8), which is rotationally symmetrical about a central axis MA, for the mounting of the centring insert (6); wherein the centring insert (6) has an opening (9) for mounting the core unit (5); wherein the centring insert (6) and the recess (8) of the centring insert holder (7) are configured in such a manner that the centring insert (6) can be inserted in the recess (8) of the centring insert holder (7) in a manner secured against rotation in at least three positions that are rotatable about a central axis MB of the centring insert (6) and in this case, the central axis MA of the recess and the central axis MB of the centring insert are superposed; and wherein a central axis MC of the opening (9) of the centring insert (6) is arranged eccentrically by an offset (V) with respect to the central axis MB of the centring insert (6); and **in that** the at least one centring device is arranged in the stripping plate (12).

2. The injection mould according to Claim 1, **characterized in that** the centring insert (6) is formed by a stripping element (13) mounted in the stripping plate (12).

3. The injection mould according to one of the preceding claims, **characterized in that** the core unit (5) is held in the core holding plate (4) in a floating manner.

4. The injection mould according to one of the preceding claims, **characterized in that** the outer contour (10) of the centring insert (6) has the shape of a regular polygon, wherein the inner contour (11) of the recess (8) of the centring insert holder (7) is constructed to be complementary to the outer contour (10) of the centring insert (6), and wherein the central axis MC of the opening (9) of the centring insert (6) is aligned eccentrically by an offset (V) towards the direction of a polygon side or a polygon corner (direction R).

5. The injection mould according to Claim 4, **characterized in that** the regular polygon has three to twelve side surfaces.

6. The injection mould according to one of Claims 1 to 3, **characterized in that** the centring insert (6) comprises a circular cylindrical base body (6a), on the cylindrical surface of which a projection (6b) standing perpendicular to the central axis MB of the centring insert (6) is arranged; and **in that** the recess (8) of the centring insert holder (7) has a shape complementary to the base body (6a), which has at least three rotationally symmetrically arranged slots (8a) running parallel to the central axis MA of the recess (8) for accommodating the projection (6b) of the centring insert (6).

7. The injection mould according to Claim 6, **characterized in that** the central axis MC of the opening (9) of the centring insert (6) is aligned eccentrically by an offset (V) in the direction towards the projection (6b) .

8. The injection mould according to one of the preceding claims, **characterized in that** the core unit (5) can be mounted in the opening (9) in such a manner that a displacement in the longitudinal direction of the core unit (5) is possible.

9. The injection mould according to one of the preceding claims, **characterized in that** the opening (9) is a through hole or a blind hole or **in that** the opening (9) is formed cylindrically or conically.

10. The injection mould according to one of the preceding claims, **characterized in that** the centring insert (6) has a cylindrical shape.

11. The injection mould according to one of the preceding claims, **characterized in that** the offset (V) is 0.01 mm to 0.1 mm.

12. The injection mould according to one of the preceding claims, **characterized in that** the injection mould has a plurality of cavities (1), which have at least one centring device in each case.

13. The injection mould according to one of the preceding claims, **characterized in that** a further centring device is arranged in the core holding plate (4) and/or the die unit (3).

14. The injection mould according to one of the preceding claims, **characterized in that** the centring insert holder is constructed as a separate part which is mounted in the die unit (3), the stripping plate (12) and/or the core holding plate (4).

15. The injection mould according to one of the preceding claims, **characterized in that** the centring insert holder is formed by the die unit (3), the stripping plate (12) and/or the core holding plate (4).

## Revendications

1. Outil de moulage par injection avec au moins un dispositif de centrage, l'outil de moulage par injection comprenant une plaque de maintien de matrice (2) avec au moins une unité de matrice (3) formant une cavité, une plaque de maintien de noyau (4) avec au moins une unité de noyau (5) qui est introduite dans l'unité de matrice (3) à l'état fermé de l'outil de moulage, et une plaque de raclage (12) entre la plaque de maintien de noyau (4) et la plaque de maintien de matrice (2), **caractérisé en ce que** le dispositif de centrage comprend un insert de centrage (6) et un support d'insert de centrage (7) avec un évidement (8) symétrique en rotation autour d'un axe central MA pour recevoir l'insert de centrage (6) ; l'insert de centrage (6) présentant une ouverture (9) pour recevoir l'unité de noyau (5) ; l'insert de centrage (6) et l'évidement (8) du support d'insert de centrage (7) étant conçus de telle sorte que l'insert de centrage (6) peut être inséré dans l'évidement (8) du support d'insert de centrage (7) sans possibilité de rotation dans au moins trois positions rotatives autour d'un axe central MB de l'insert de centrage (6), et l'axe central MA de l'évidement et l'axe central MB de l'insert de centrage se superposant alors ; et un axe central MC de l'ouverture (9) de l'insert de centrage (6) étant agencé de manière excentrée d'un décalage (V) par rapport à l'axe central MB de l'insert de centrage (6) ; et **en ce que** l'au moins un dispositif de centrage est agencé dans la plaque de raclage (12).

2. Outil de moulage par injection selon la revendication 1, **caractérisé en ce que** l'insert de centrage (6) est réalisé par un élément de raclage (13) reçu dans la plaque de raclage (12).

3. Outil de moulage par injection selon l'une quelconque des revendications précédentes, **caractérisé en ce que** l'unité de noyau (5) est maintenue de manière flottante dans la plaque de maintien de noyau (4).

4. Outil de moulage par injection selon l'une quelconque des revendications précédentes, **caractérisé en ce que** le contour extérieur (10) de l'insert de centrage (6) présente la forme d'un polygone régulier, le contour intérieur (11) de l'évidement (8) du support d'insert de centrage (7) étant réalisé sous forme complémentaire du contour extérieur (10) de l'insert de centrage (6), et l'axe central MC de l'ouverture (9) de l'insert de centrage (6) étant orienté de manière excentrée d'un décalage (V) en direction d'un côté du polygone ou d'un coin du polygone (direction R).

5. Outil de moulage par injection selon la revendication 4, **caractérisé en ce que** le polygone régulier présente trois à douze surfaces latérales.

6. Outil de moulage par injection selon l'une quelconque des revendications 1 à 3, **caractérisé en ce que** l'insert de centrage (6) comprend un corps de base cylindrique circulaire (6a) sur la surface d'enveloppe duquel est agencée une saillie (6b) perpendiculaire à l'axe central MB de l'insert de centrage (6) ; et **en ce que** l'évidement (8) du support d'insert de centrage (7) présente une forme complémentaire au corps de base (6a), qui présente au moins trois fentes (8a) agencées à symétrie de rotation, s'étendant parallèlement à l'axe central MA de l'évidement (8) pour recevoir la saillie (6b) de l'insert de centrage (6).

7. Outil de moulage par injection selon la revendication 6, **caractérisé en ce que** l'axe central MC de l'ouverture (9) de l'insert de centrage (6) est orienté de manière excentrée d'un décalage (V) en direction de la saillie (6b).

8. Outil de moulage par injection selon l'une quelconque des revendications précédentes, **caractérisé en ce que** l'unité de noyau (5) peut être reçue dans l'ouverture (9) de manière à permettre un déplacement dans la direction longitudinale de l'unité de noyau (5).

9. Outil de moulage par injection selon l'une quelconque des revendications précédentes, **caractérisé en ce que** l'ouverture (9) est un trou débouchant ou un trou borgne, ou **en ce que** l'ouverture (9) est réalisée sous forme cylindrique ou conique.

10. Outil de moulage par injection selon l'une quelconque des revendications précédentes, **caractérisé en ce que** l'insert de centrage (6) présente une forme cylindrique.

11. Outil de moulage par injection selon l'une quelconque des revendications précédentes, **caractérisé en ce que** le décalage (V) est de 0,01 mm à 0,1 mm.

12. Outil de moulage par injection selon l'une quelconque des revendications précédentes, **caractérisé en ce que** l'outil de moulage par injection présente plusieurs cavités (1) qui présentent chacune au moins un dispositif de centrage.

13. Outil de moulage par injection selon l'une quelconque des revendications précédentes, **caractérisé en ce qu'**un autre dispositif de centrage est agencé dans la plaque de maintien de noyau (4) et/ou l'unité de matrice (3).

14. Outil de moulage par injection selon l'une quelconque des revendications précédentes, **caractérisé en ce que** le support d'insert de centrage est réalisé sous forme de pièce séparée logée dans l'unité de matrice (3), la plaque de raclage (12) et/ou la plaque de maintien de noyau (4).

15. Outil de moulage par injection selon l'une quelconque des revendications précédentes, **caractérisé en ce que** le support d'insert de centrage est réalisé par l'unité de matrice (3), la plaque de raclage (12) et/ou la plaque de maintien de noyau (4).
